# EUROPÄISCHE PATENTSCHRIFT

(11) **EP 1 334 505 B1**
(45) Veröffentlichungstag und Bekanntmachung des Hinweises auf die Patenterteilung: **02.08.2006**
(21) Anmeldenummer: 01987940.2
(22) Anmeldetag: 13.10.2001
(51) Int. Cl.: H01H 85/36, H01H 85/02, H01H 37/76

(54) **ÜBERLASTSCHUTZ FÜR ELEKTRISCHE MASCHINEN**
OVERLOAD PROTECTOR FOR ELECTRICAL MOTORS
PROTECTION CONTRE LES SURCHARGES POUR MACHINES ELECTRIQUES

(30) Priorität: 21.10.2000 DE 10052220
(43) Veröffentlichungstag der Anmeldung: 13.08.2003
(73) Patentinhaber: ROBERT BOSCH GMBH, 70442 Stuttgart (DE)
(72) Erfinder: GROSS, Gerhard, 77886 Lauf (DE); FOERSTERA, Josef, 77830 Buehlertal (DE); MERSCHROTH, Bernhard, 77833 Ottersweier (DE); HANEK, Michael, 77871 Renchen (DE)
(86) Internationale Anmeldenummer: PCT/DE2001/003930
(87) Internationale Veröffentlichungsnummer: WO 2002/033721

(56) Entgegenhaltungen:
- DE-A- 2 125 116
- DE-A- 3 045 540
- FR-A- 968 991
- FR-A- 2 510 811

## Beschreibung

### Stand der Technik

Die Erfindung geht aus von einem Überlastschutz für elektrische Maschinen nach der Gattung des Anspruchs 1.

Ein solcher Überlastschutz ist aus dem Dokument FR968991 bekannt. Elektrische Maschinen, wie z.B. Elektromotoren, enthalten haufig Thermoschutzschalter, die im Blockierfall oder bei Schwergängigkeit die elektrische Maschine vor Zerstörung oder Brand schützen. Oft wird dazu eine Entstördrossel verwendet, die zweiteilig ausgeführt ist und an einer zu trennenden Verbindungsstelle mit einem Lot bestimmter Schmelztemperatur zusammengelötet ist, also eine Lotstelle bildet. Bei Erwärmung der Entstördrossel durch eine Kohlebürste oder ein Kohlebürstenseil wird dieses Lot erwärmt und schmilzt bei einer ausgewählten Schmelztemperatur. Die Windungen der Entstördrossel üben eine gewisse Vorspannung auf die Entstördrossel und damit auf die Verbindungsstelle aus, so dass bei Erweichung der Lotstelle diese Verbindung getrennt werden sollte. Der elektrische Stromkreis der elektrischen Maschine soll dann dauerhaft unterbrochen und die elektrische Maschine soll vor Zerstörung geschützt sein.

Häufig ist jedoch die Vorspannung nicht hoch genug, so dass bei Erwärmung der Entstördrossel die Lotstelle nicht sicher getrennt wird.

### Vorteile der Erfindung

Der erfindungsgemässe Überlastschutz für elektrische Maschinen hat dem gegenüber den Vorteil, dass auf einfache Art und Weise eine elektrische Maschine vor Zerstörung oder Brand geschützt ist.

Durch die in den abhängigen Ansprüchen aufgeführten Massnahmen sind vorteilhafte Weiterbildungen und Verbesserungen des im Anspruch 1 genannten Überlastschutzes möglich.

Um die mechanische Spannung auf die Verbindungsstelle auszuüben, ist es vorteilhaft einen Blechstreifen zu verwenden, der an ein Anschlusselement der Entstördrossel elektrisch angeschlossen ist.

Eine weitere vorteilhafte Ausgestaltung der Anschlussfahne stellt eine Schraubenfeder dar.

### Zeichnung

Ein Ausführungsbeispiel der Erfindung ist in der Zeichnung vereinfacht dargestellt und in der nachfolgenden Beschreibung näher erläutert.

Es zeigen
Figur 1 ein Entstördrossel nach dem Stand der Technik,
Figur 2 eine Entstördrossel eines erfindungsgemässen Überlastschutzes angeordnet in einem Bürstenhalter,
Figur 3 einen Teilausschnitt eines erfindungsgemässen Überlastschutzes.

### Beschreibung des Ausführungsbeispiels

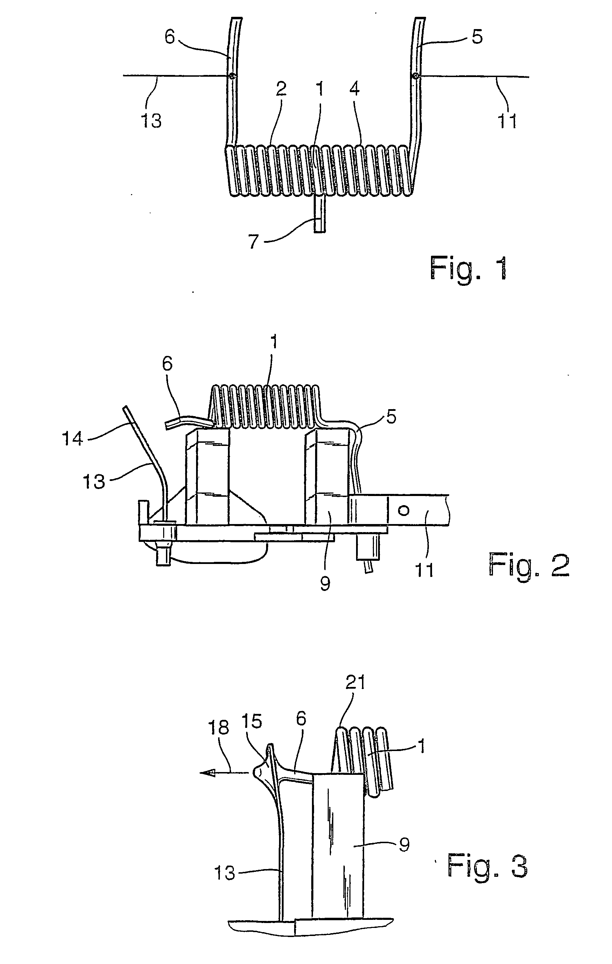

Figur 1 zeigt eine Entstördrossel nach dem Stand der Technik, die zweiteilig ausgeführt ist, und aus einem ersten Teil 2 und einem zweiten Teil 4 besteht. Das erste Teil 2 und das zweite Teil 4 sind an einer Trennstelle 7 mit einem Lot verbunden. Das Lot schmilzt bei einer bestimmten Temperatur. Das Lot wird je nach Anwendungsfall nach seiner Schmelztemperatur ausgewählt.
Die Bezugszeichen für die Entstördrossel nach dem Stand der Technik sollen auch für eine erfindungsgemässe Entstördrossel 1 (Fig. 2,3) gelten.
Die Entstördrossel hat weiterhin ein erstes elektrisches Anschlusselement 5 und ein zweites elektrisches Anschlusselement 6 für einen elektrischen Anschluss in einem elektrischen Stromkreis.

Figur 2 zeigt die Entstördrossel 1 eines erfindungsgemässen Überlastschutzes im teilweise eingebauten Zustand in einem Bürstenhalter 9. Beispielsweise ist das erste Anschlusselement 5 mit einer ersten elektrischen Anschlussfahne 11 verbunden, die im Bürstenhalter 9 integriert ist. Die Anschlussfahne 11 bildet den Anschluss an den elektrischen Stromkreis einer elektrischen Maschine. Die erste Anschlussfahne 11 übt beispielsweise keine mechanische Spannung auf das erste Anschlusselement 5 und deren Verbindungsstelle aus.

Das zweite Anschlusselement 6 der Entstördrossel 1 wird ebenfalls elektrisch und mechanisch an eine zweite elektrische Anschlussfahne 13 angeschlossen. Die zweite Anschlussfahne 13 ist in dem Bürstenhalter 9 mit einer weiteren elektrischen Leitung verbunden. Das freie Ende 14 der zweiten Anschlussfahne 13 muss unter Aufbringung einer Kraft in Richtung des zweiten Anschlusselements 6 bewegt werden, damit sie an dem zweiten Anschlusselement 6 befestigt werden kann.

Figur 3 zeigt, wie die zweite Anschlussfahne 13 mit dem zweiten Anschlusselement 6 verbunden ist. Eine Verbindungsstelle 15, durch Löten hergestellt, stellt die mechanische und elektrische Verbindung zwischen dem zweiten Anschlusselement 6 und dem freien Ende 14 der zweiten Anschlussfahne 13 her.
Ausgehend von Figur 2 geschieht dies bspw. wie folgt: Das freie Ende 14 der zweiten Anschlussfahne 13 wird unter Aufbringung einer mechanischen Kraft in Richtung (parallel zu 18) des zweiten Anschlusselements 6 gebogen, wobei unter Aufrechterhaltung der Kraft die Verbindung beispielsweise durch Löten hergestellt wurde. Nachdem die Verbindungsstelle 15 hergestellt ist, beispielsweise nach Abkühlen des Lots, kann die Kraft auf die zweite Anschlussfahne 13 zurückgenommen werden. Die zweite Anschlussfahne 13 übt dann eine mechanische Spannung in axialer Richtung 18 auf die Verbindungsstelle 15 aus.
Ebenso können beide Anschlussfahnen 11, 13 benutzt werden, eine mechanische Spannung auf die jeweiligen Verbindungsstellen 15 auszuüben.
Die Anschlussfahnen 11, 13 können auch Schraubenfedern sein.

Die Verbindungsstelle 15 von Anschlussfahne 11, 13 und Anschlusselement 5,6 übernimmt die Funktion der Trennstelle 7 der Entstördrossel nach dem Stand der Technik.
Diese Trennstelle 7 entfällt bei dem erfindungsgemässen Überlastschutz. Statt dessen wird eine Verbindungsstelle 15 genutzt, die auch beim Stand der Technik vorhanden ist. Diese über die Abmasse der Entstördrossel vorstehende Trennstelle 7 verursacht oft einen Masseschluss im Polgehäuse, wenn die Verbindungsstelle 7 getrennt ist. Dieser Nachteil entfällt bei dem erfindungsgemässen Überlastschutz.
Dadurch, dass es zwei Verbindungsstellen von Anschlussfahnen und Anschlusselementen gibt, können auch beide als zu trennende Verbindungsstelle für den Überlastfall ausgelegt werden.

## Patentansprüche

1. Überlastschutz für elektrische Maschinen, umfassend
eine Entstördrossel mit zwei elektrischen Anschlusselementen, die an jeweils eine elektrische Anschlussfahne eines weiteren elektrischen Stromkreises angeschlossen sind, und
zumindest eine Verbindungsstelle, die bei einer Erwärmung der Entstördrossel aufgund einer mechanischen Spannung gelöst wird,
wobei die zumindest eine Verbindungsstelle (15) durch die Verbindung von zumindest einer als Blechstreifen ausgebildeten Anschlussfahne (11,13) und dem jeweiligen Anschlusselement (5,6) gebildet ist,
und wobei die zumindest eine Anschlussfahne (11,13) eine mechanische Spannung auf die Verbindungsstelle (15) ausübt,
**dadurch gekennzeichnet, dass**
die Anschlussfahne (11, 13) direkt mit dem Wicklungsdraht der Entstördrossel (1) verbunden ist.

2. Überlastschutz nach Anspruch 1,
**dadurch gekennzeichnet, dass**
die Anschlussfahne (11,13) ein Blechstreifen ist, der auf die Verbindungsstelle (15) in radialer Richtung eine Kraft ausübt.

3. Überlastschutz nach Anspruch 1,
**dadurch gekennzeichnet, dass**
die Anschlussfahne (11,13) eine Schraubenfeder ist.

## Claims

1. Overload protection for electrical machines, comprising an interference suppression inductor having two electrical connection elements, which are connected to in each case one electrical connection lug of a further electrical circuit, and at least one connecting point, which is released in the event of the interference suppression inductor being heated owing to a mechanical stress, the at least one connecting point (15) being formed by the connection between at least one connection lug (11, 13), which is in the form of a sheet-metal strip, and the respective connection element (5, 6), and the at least one connection lug (11, 13) exerting a mechanical stress on the connecting point (15), **characterized in that** the connection lug (11, 13) is connected directly to the winding wire of the interference suppression inductor (1).

2. Overload protection according to Claim 1, **characterized in that** the connection lug (11, 13) is a sheet-metal strip, which exerts a force on the connecting point (15) in the radial direction.

3. Overload protection according to Claim 1, **characterized in that** the connection lug (11, 13) is a helical spring.

## Revendications

1. Protection contre les surcharges pour machines électriques, comprenant :
un dispositif anti-parasite muni de deux éléments de connexion électrique raccordés chacun à une patte de connexion électrique d'un autre circuit électrique, et
au moins un point de liaison, libéré en cas d'échauffement du dispositif anti-parasite suite à une tension mécanique,
au moins un point de liaison (15) formé par la liaison d'au moins une patte de connexion (11, 13) ayant la forme d'une bande en tôle métallique et de l'élément de connexion électrique (5, 6) respectif,
et au moins une patte de connexion (11, 13) exerçant une tension mécanique sur le point de connexion (15),
**caractérisée en ce que**
la patte de connexion (11, 13) est directement reliée au fil de bobinage du piège anti-parasite (1).

2. Protection contre les surcharges selon la revendication 1,
**caractérisée en ce que**
la patte de connexion (11, 13) est une bande en tôle métallique qui exerce une force dans la direction radiale sur le point de connexion (15).

3. Protection contre les surcharges selon la revendication 1,
**caractérisée en ce que**
la patte de connexion (11, 13) est un ressort hélicoïdal.
